# EUROPÄISCHE PATENTSCHRIFT

(11) **EP 3 881 674 B1**
(45) Veröffentlichungstag und Bekanntmachung des Hinweises auf die Patenterteilung: **23.09.2026**
(21) Anmeldenummer: 21163184.1
(22) Anmeldetag: 17.03.2021
(51) Int. Cl.: A01K 1/015

(54) **SCHICHTSYSTEM ALS BODENUNTERLAGE FÜR KLEINTIERGEHEGE UND VERFAHREN ZU DESSEN HERSTELLUNG**
LAYER SYSTEM AS A BASE FOR SMALL ANIMAL ENCLOSURE AND METHOD OF MANUFACTURING THE SAME
SYSTÈME DE COUCHES SERVANT DE SUPPORT DE SOL POUR PETITS ANIMAUX ET SON PROCÉDÉ DE FABRICATION

(30) Priorität: 18.03.2020 DE 102020107406
(43) Veröffentlichungstag der Anmeldung: 22.09.2021
(73) Patentinhaber: Scheibe, Jens, 13407 Berlin (DE)
(72) Erfinder: Scheibe, Jens, 13407 Berlin (DE)
(74) Vertreter: ETL IP Patent- und Rechtsanwaltsgesellschaft mbH

(56) Entgegenhaltungen:
- EP-A1- 2 008 510
- WO-A1-2018/123068
- CH-A1- 714 711
- DE-A1- 19 613 930
- DE-U1- 29 718 957

## Beschreibung

Als Bodenbedeckung für Kleintiergehege werden bislang Sägespäne verwendet, auf die eine Lage Stroh angeordnet wird. Dabei dienen die Sägespäne in erster Linie als saugfähiges Material zum Aufsaugen von Flüssigkeiten, insbesondere Urin. Das Stroh ist zur Erhöhung des Komforts, sowie als Baumaterial und Nagegrundlage Teil der Bodenbedeckung. Ein Nachteil dieser Kombination ist der Aufwand in Bezug auf Anordnung im und Entnahme aus dem Käfig. Die Sägespäne sind im trockenen Zustand sehr windanfällig und verteilen sich leicht weit außerhalb des Bestimmungsorts, gleiches gilt für das Stroh. Im feuchten Zustand kleben die Sägespäne auf dem Boden fest und lassen sich nur mit Hilfsmitteln entfernen. Ferner ist ein Nachteil, dass die Materialien von den Tieren aus dem Boden gescharrt werden und dies neben Verdreckung der Umgebung dazu führt, dass die Tiere direkt auf dem Käfigboden sitzen. Dies ist weder aus hygienischen Gründen noch in Bezug auf die Krallenentwicklung wünschenswert.

Ferner sind Pellets bekannt, die die Funktion beider Materialien vereinen. Ein Pellet ist ein kleiner Körper aus verdichtetem Material in Kugel- oder Zylinderform. Meistens wird der Begriff im Plural gebraucht, da Pellets nicht einzeln, sondern als Schüttgut verwendet werden. Die in der Tierpflege Verwendung findenden Pellets enthalten meist ein saugfähiges Material, wie Sägespäne und/oder Futtermaterialien, so dass die Pellets als Aufnahmemittel für Flüssigkeiten und Futter gleichermaßen dienen. Diese Materialien sind allerdings wieder scharrfähig und, obschon sie Vorteile bei der Befüllung des Käfigs bieten, da sie leicht zu dosieren, schüttfähig und wenig fluganfällig sind, im genutzten Zustand ähnlich aufwändig aus dem Käfig zu entfernen wie Sägespäne.

DE29718957U1 offenbart ein Substrat für Kleintierkäfige, insbesondere für Zwerghasen, Meerschweinchen oder dergleichen, bestehend aus einem flexiblen, luftdurchlässigen, flachen bahn- oder bogenartigen Grundkörper, der mit porösem, körnigen und saugfähigem Material verbunden ist.

CH714711A1 offenbart eine Stalleinlage umfassend eine erste und eine zweite Schicht, die mit einem biologisch abbaubarem Kleber verbunden sind.

Aufgabe der Erfindung ist es nun die Nachteile des Stands der Technik zu beheben, oder zumindest zu reduzieren. Insbesondere soll ein Material bereitgestellt werden, welches bei Anordnung als Unterlage maximalen und vor allem dauerhaften Komfort für Tiere, insbesondere Kleintiere bietet und dabei leicht im Käfig anzuordnen und zu entfernen ist. Diese Aufgabe wird durch ein Schichtsystem und ein Verfahren zu dessen Herstellung mit den Merkmalen der unabhängigen Ansprüche gelöst.

Somit betrifft ein erster Aspekt der Erfindung ein Schichtsystem, welches eine Unterschicht und eine daran angeordnete Oberschicht aufweist, wobei Ober- und Unterschicht durch eine Haftvermittlerschicht stoffschlüssig miteinander verbunden sind. Erfindungsgemäß weist die Unterschicht eine erste Komponente auf, die ihrerseits kraft- und/oder reibschlüssig miteinander verbundene Fasern eines natürlichen Materials umfasst.

Die an der Unterschicht angeordnete und stoffschlüssig mit dieser verbundene Oberschicht umfasst ihrerseits eine zweite Komponente, welche Pellets eines natürlichen Materials aufweist oder aus einer solchen besteht.

Bevorzugt wird das Schichtsystem als Unterlage in einem Tiergehege, insbesondere in einem Kleintiergehege verwendet. Somit ist ein weiterer Aspekt der Erfindung eine Tiergehegeein- bzw. unterlage umfassend oder bestehend aus einem erfindungsgemäßen Schichtsystem. Vorliegend wird unter Tiergehege jede räumlich begrenzte zum temporären oder langfristigen Aufenthalt von Tieren geeignete Vorrichtung, wie beispielsweise Stallungen, Transportboxen oder -container, Terrarien und Käfige verstanden.

Die Verwendung ausschließlich natürlicher Materialien stellt die absolute Verträglichkeit im Haus- und Heimtierbedarf sicher und ermöglicht zudem eine Reduktion an Müll durch die Möglichkeit der Kompostierbarkeit der gesamten Unterlage, ohne, dass die einzelnen Bestandteile aufwändig getrennt werden müssen.

Der Vorteil dieses Schichtsystems bei der Nutzung als Unterlage bei Tier-, insbesondere der Kleintierhaltung besteht bei der besonders guten Handhabung und der damit verbundenen deutlichen Zeitersparnis bei der Auswechselung der Käfigunterlagen. Das Schichtsystem bietet die Möglichkeit die Vorteile eines Systems aus mehreren Unterlagesystemen, wie saugfähiges Material und ortsfester Unterlage mit nur einem Arbeitsschritt zu kombinieren. Die Umgebung des Käfigs wird nicht beschmutzt. Die Unterschicht ist form- und ortsstabil und verbleibt auch bei Scharr- und Kratzversuchen als Unterlage im Käfig.

In bevorzugter Ausgestaltung des erfindungsgemäßen Schichtsystems umfasst die Haftvermittlungsschicht einen Haftvermittler, der für den Verzehr geeignete Bestandteile, insbesondere stärkehaltige Bestandteile, insbesondere Mehl, und/oder Zucker und/ oder Fette umfasst. Dies hat den Vorteil, dass die Haftvermittlerschicht besonders günstig und ökologisch abbaubar ist. Darüber hinaus ist sie beim Verzehr durch Tiere oder Kinder völlig unbedenklich. Die haftvermittelnden Eigenschaften der Haftvermittlerschicht werden bereits bei geringen Schichtdicken erzielt. Gleichzeitig steigt die Haftung bis zu einer bestimmten Dicke der Schicht weiter an. Es hat sich gezeigt, dass Schichtdicken der Haftvermittlerschicht bevorzugt im Bereich von 0,5 bis 5 mm, vorzugsweise im Bereich von 0,7 bis 3 mm, insbesondere im Bereich von 0,7 bis 2 mm liegen, da bei höheren Schichtdicken kein zusätzlicher Haftungsgewinn mehr erzielt werden kann und die Nachteile, wie zunehmendes Gewicht des Schichtsystems überwiegen. Darüber hinaus sollte aufgrund der erhöhten Nährwerte eine möglichst geringe Schichtdicke des Haftvermittlers angestrebt werden.

Mit Vorteil ist eine äußere Oberfläche der Pellets der zweiten Komponente mittels eines Aufrauhungsverfahrens vergrößert, da dies die Haftung des Haftvermittlers an den Pellets erhöht. Besonders geeignet zeigen sich chemische und/oder physikalische Aufrauhungsverfahren. Dabei haben chemische Verfahren den Vorteil die komprimierte Struktur der Pellets nicht zu zerstören, wohingegen physikalische Verfahren aus Gründen der medizinischen Unbedenklichkeit vorteilhaft sind.

Die Aufrauhung der ersten Komponente ist zumindest im Rohzustand nicht erforderlich, da der Haftvermittler auch in dünnen Schichten die einzelnen Fasern zumindest teilweise umschließt und somit eine gute Haftung per se gegeben ist.

Liegt die erste Komponente zum Zeitpunkt des Haftvermittlerauftrags bereits als Gewebe oder Gewirk vor, ist es jedoch insbesondere dann, wenn der Haftvermittler in eher zähflüssiger Form aufgetragen wird, bevorzugt, wenn die Oberfläche des Gewebes oder Gewirks derart aufgeraut wird, dass einzelne Fasern aus der Oberfläche herausragen.

Somit ist bevorzugt, wenn Fasern der ersten Komponente in die Haftvermittlerschicht hineinragen.

In weiter bevorzugter Ausgestaltung der Erfindung ist vorgesehen, dass die zweite Komponente Holz, Holzspäne, Holzstaub, Kork, getrocknete Pflanzenbestandteile, insbesondere Stroh und/oder Heu, Sand, Melasse und/oder Salze umfasst oder aus diesen besteht. Derartige Komponenten sind zum einen gut im Tierbereich verträglich und werden ohnehin als Einstreu eingesetzt. Darüber hinaus sind sie gut komprimierbar und saugfähig. Da zumindest einige der genannten Materialien zudem zu Bestandteilen des Grundfutters von Nagetieren oder auch größeren pflanzenfressenden Haustieren werden derartige Pellets gern als Nahrungsquelle, insbesondere von Kleintieren, wie Nagern angenommen, daher ist ferner bevorzugt die Pellets mit ernährungsergänzenden Bestandteilen wie Salzen und Mineralien anzureichern.

Die zweite Komponente, also im Wesentlichen die Pellets der Oberschicht sind je nach Anspruch, Funktion und Verwendung ein- oder mehrlagig in der Oberschicht angeordnet. Bei mehrlagiger Anordnung sind einander benachbarte Lagen durch den oben beschriebenen Haftvermittler miteinander verbunden. Je nach Verwendung des Schichtsystems ist bevorzugt, dass unterschiedliche Abschnitte eine unterschiedliche Anzahl von Lagen der zweiten Komponente aufweisen. Somit kann beispielsweise bei der Verwendung des Schichtsystems in Nagergehegen in Bereichen, die üblicherweise höher frequentiert zum Urinieren genutzt werden (wie dies beispielsweise in Gehegeecken der Fall ist), die Oberschicht mehrlagig, insbesondere bis zu 4-lagig ausgestaltet sein.

Ferner ist bevorzugt, dass die erste Komponente Hanf, Sisal, Kokosfasern, Holzfasern, Flachs, Baumwolle und/oder Ölleinenfaser umfasst oder aus diesen besteht. Derartige Materialien erwiesen sich als saugstark und strukturstabil und sind überdies zum Nestbau von Kleintieren, insbesondere Nagern geeignet.

Zur Stabilisierung der Unterschicht sind die Fasern der ersten Komponente bevorzugt in Form eines Gewirks oder Gewebes angeordnet. Je nach Funktion ist dabei die Gewebe- oder Gewirkfestigkeit an die Funktion des Schichtsystems anpassbar. Eine höhere Gewebe- bzw. Gewirkfestigkeit geht mit einer höheren Saugstärke einher, wohingegen ein eher lockeres Gewebe oder Gewirk von Kleintieren lieber zum Scharren angenommen wird. Bevorzugt weist das Gewebe über seine Fläche unterschiedliche Gewebe- oder Gewirkfestigkeiten auf.

Alternativ oder zusätzlich kann die erste Komponente den Haftvermittler aufweisen. Die Unterschicht gibt bevorzugt im Wesentlichen die räumliche Struktur des Schichtsystems vor.

Je nach Anwendung ist die Unterschicht im Wesentlichen plan ausgestaltet. Alternativ ist sie dreidimensional konkav oder konvex geformt. Diese Formen können Teil des Schichtsystems oder separat vorliegen. Eine konkave Wölbung bietet beispielsweise den Vorteil einer Nutzung als Futternapf, während eine konvexe Ausformung beispielsweise als Bau oder Versteck nutzbar ist.

Mit Vorteil weist die Unterschicht eine Dicke im Bereich von 4 bis 20 mm, vorzugsweise im Bereich von 7 bis 14 mm auf.

Mit besonderem Vorteil weist die Unterschicht ferner granulare Bestandteile, insbesondere Körner auf. Dies ermöglicht, insbesondere bei der Verwendung des Schichtsystems im Nagerbereich, eine Anregung der Tiere zur Beschäftigung und dazu, sich das Futter zu verdienen. Mithin wird eine artgerechte Haltung und eine Auslastung der Tiere erhöht.

Ein weiterer Aspekt der Erfindung betrifft ein Verfahren zum Herstellen des erfindungsgemäßen Schichtsystems, wobei ein Adhäsionsmittel mittels Sprühens, Tauchens, Walzen, Streichens oder Rakelns auf eine erste Komponente mit faserigen Materialien und/oder auf Pellets einer zweiten Komponente aufgetragen wird und die erste Komponente mit der zweiten Komponente derart kontaktiert wird, dass das Adhäsionsmittel zwischen die beiden Komponenten angeordnet wird, wobei das Adhäsionsmittel, stärkehaltige Bestandteile, Fette und/oder einen Zucker umfasst.

Mit Vorteil können die Pellets der zweiten Komponente, oder die als Gewebe oder Gewirk vorliegende zweite Komponente, durch ein geeignetes Verfahren aufgerauht werden, um die Haftung zu erhöhen.

Bevorzugt liegt das Adhäsionsmittel in flüssiger Form vor, wobei vorzugsweise Wasser als Lösungsmittel für die festen Bestandteile dient. Nach dem Auftragen des Adhäsionsmittels auf zumindest eine der beiden Komponenten (erste Komponente oder zweite Komponente) und dem anschließenden Kontaktieren, können die beiden Schichten miteinander verpresst werden. Dies erhöht die Fügung der Pellets in der Oberschicht, mindert Hohlräume zwischen den Pellets oder reduziert die Größe der entstehenden Hohlräume und vergrößert die Auflagefläche der Pellets auf der Oberfläche der Unterschicht. Zudem dringt das Adhäsionsmittel tiefer in die Unterschicht ein, was ebenfalls die Haftung erhöht.

Abschließend erfolgt eine passive oder durch Wärme und/oder Lüftung unterstützte Trocknung. In dem entstehenden Schichtsystem bildet das Adhäsionsmittel nach Verdunstung des Lösungsmittels die Haftvermittlerschicht des erfindungsgemäßen Schichtsystems.

Die beschriebenen Ausführungsformen sind, sofern im Einzelfall nicht anders beschrieben mit Vorteil miteinander kombinierbar.

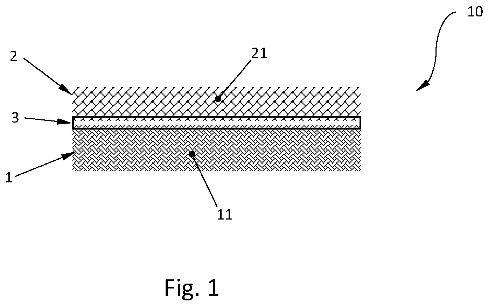

Nachfolgend wird die Erfindung anhand einer Figur beispielhaft erläutert. Die einzige Figur 1 zeigt eine schematische Querschnittszeichnung eines erfindungsgemäßen Schichtsystems in einer bevorzugten Ausgestaltung.

Figur 1 zeigt eine schematische Querschnittzeichnung eines erfindungsgemäßen Schichtsystems 10. Das Schichtsystem 10 umfasst eine Unterschicht 1 und eine daran angeordnete Oberschicht 2. Die Unterschicht 1 umfasst eine erste Komponente 11 oder besteht aus einer solchen. Die erste Komponente 11 weist Fasern eines natürlichen Materials auf. Das natürliche Material ist beispielsweise Hanf, Sisal, Kokoswolle, Holz, Holzhobel, Kork oder Ölleinen oder Mischungen aus diesen. In der Unterschicht 1 liegt die erste Komponente 11 bevorzugt als Gewebe oder Gewirk vor.

Zusätzlich können in der Unterschicht weitere Komponenten angeordnet, insbesondere eingenadelt sein. Bei den weiteren Komponenten handelt es sich beispielsweise um Körner oder Spielzeug oder Kräuter für Kleintiere, insbesondere Nager.

Die Oberschicht 2 umfasst eine zweite Komponente 21 oder besteht aus dieser. Die zweite Komponente 21 liegt bevorzugt in Form längserstreckter Körper, insbesondere als Pellets vor.

Diese weisen ein komprimiertes natürliches Material auf. Als Materialien der zweiten Komponente 21 sind Stroh, Kräuter, Heu, Sägespäne, Getreide und Samen bevorzugt.

Die Oberschicht 2 kann mehrlagig ausgeführt sein, wobei mehrere Lagen der Pellets übereinander angeordnet sind.

Zwischen der Unterschicht 1 und der Oberschicht 2 ist eine Haftvermittlerschicht 3 angeordnet. Diese umfasst bevorzugt stärkehaltigen Substanzen, wie beispielsweise Mehl, einen Zucker und oder Fette. Bevorzugt ragen die Fasern der Unterschicht 1 in die Haftvermittlerschicht 3 hinein. Zur Anordnung zwischen den Oberschicht 2 und Unterschicht 1 wird der Haftvermittler in flüssiger oder zähflüssiger Form auf der ersten Komponente 11 oder der zweiten Komponente 21 durch Sprühen, Rakeln, Tauchen, Rollen, Streichen oder Gießen aufgetragen.

## Patentansprüche

1. Schichtsystem (10) umfassend
- eine Unterschicht (1), umfassend eine erste Komponente (11), aufweisend kraft- und/oder reibschlüssig miteinander verbundene Fasern eines natürlichen Materials,
- eine an der Unterschicht (1) angeordnete und stoffschlüssig mit dieser verbundenen Oberschicht (2), umfassend eine zweite, Pellets eines natürlichen Materials aufweisende Komponente (21)
- eine zwischen Ober- und Unterschicht (2, 1) angeordnete Haftvermittlungsschicht (3).

2. Schichtsystem (10) nach Anspruch 1, **dadurch gekennzeichnet, dass** die Haftvermittlungsschicht (3) für den Verzehr geeignete Bestandteile, insbesondere stärkehaltige Bestandteile, insbesondere Mehl, und/oder Zucker und/ oder Fette umfasst und/oder eine Dicke von bis zu 2 mm aufweist.

3. Schichtsystem (10) nach einem der vorhergehenden Ansprüche, **dadurch gekennzeichnet, dass** eine äußere Oberfläche der Pellets der zweiten Komponente (21) mittels eines Aufrauhungsverfahrens vergrößert ist, insbesondere durch chemische und/oder physikalische Aufrauhungsverfahren.

4. Schichtsystem (10) nach einem der vorhergehenden Ansprüche, **dadurch gekennzeichnet, dass** die zweite Komponente Holz, Holzspäne, Holzstaub, Kork, getrocknete Pflanzenbestandteile, insbesondere Stroh und/oder Heu umfasst oder aus diesen besteht.

5. Schichtsystem (10) nach einem der vorhergehenden Ansprüche, **dadurch gekennzeichnet, dass** die Oberschicht eine Dicke im Bereich von 4 bis 20 mm, insbesondere im Bereich von 7 bis 14 mm aufweist.

6. Schichtsystem (10) nach einem der vorhergehenden Ansprüche, **dadurch gekennzeichnet, dass** die erste Komponente Hanf, Sisal, Kokosfasern, Holzfasern, Flachs, Baumwolle und/oder Ölleinenfaser umfasst oder aus diesen besteht.

7. Schichtsystem (10) nach einem der vorhergehenden Ansprüche, **dadurch gekennzeichnet, dass** die Unterschicht (1) ferner granulare Bestandteile, insbesondere Körner aufweist.

8. Schichtsystem (10) nach einem der vorhergehenden Ansprüche, zur Verwendung in einem Kleintiergehege.

9. Verfahren zum Herstellen eines Schichtsystems (10) nach einem der vorhergehenden Ansprüche, wobei ein Adhäsionsmittel mittels Sprühens, Tauchens, Walzen, Streichens oder Rakelns auf eine erste Komponente mit faserigen Materialien und/oder auf Pellets einer zweiten Komponente (21) aufgetragen wird und die erste Komponente (11) mit der zweiten Komponente (21) derart kontaktiert wird, dass das Adhäsionsmittel zwischen die beiden Komponenten angeordnet wird, wobei das Adhäsionsmittel, stärkehaltige Bestandteile und/oder einen Zucker umfasst.

## Claims

1. A layer system (10) comprising
- a lower layer (1) comprising a first component (11) which has fibers of a natural material, which are connected to one another in a non-positive and/or frictionally engaged manner,
- an upper layer (2) arranged on the lower layer (1) and connected to it in a firmly bonded manner, comprising a second component (21) which has pellets of a natural material
- an adhesion promoting layer (3) arranged between the upper and lower layers (2, 1).

2. The layer system (10) according to Claim 1, **characterized in that** the adhesion promoting layer (3) comprises constituents suitable for consumption, in particular constituents containing starch, in particular flour, and/or sugar and/or fats, and/or has a thickness of up to 2 mm.

3. The layer system (10) according to any one of the preceding claims, **characterized in that** an outer surface of the pellets of the second component (21) is enlarged by means of a roughening method, in particular by chemical and/or physical roughening methods.

4. The layer system (10) according to any one of the preceding claims, **characterized in that** the second component comprises wood, wood shavings, wood dust, cork, dried plant constituents, in particular straw and/or hay, or consists of these.

5. The layer system (10) according to any one of the preceding claims, **characterized in that** the upper layer has a thickness in the range of 4 to 20 mm, in particular in the range of 7 to 14 mm.

6. The layer system (10) according to any one of the preceding claims, **characterized in that** the first component comprises hemp, sisal, coconut fibers, wood fibers, flax, cotton and/or oil flax fiber, or consists of these.

7. The layer system (10) according to any one of the preceding claims, **characterized in that** the lower layer (1) furthermore has granular constituents, in particular grains.

8. The layer system (10) according to any one of the preceding claims for use in a small animal enclosure.

9. A method for manufacturing a layer system (10) according to any one of the preceding claims, wherein an adhesion agent is applied by means of spraying, dipping, rolling, spreading or knife coating to a first component having fibrous materials and/or to pellets of a second component (21), and the first component (11) is contacted with the second component (21) such that the adhesion agent is arranged between the two components, wherein the adhesion agent comprises constituents containing starch and/or a sugar.

## Revendications

1. Système de couches (10) comprenant
- une couche inférieure (1), comprenant un premier composant (11) qui présente des fibres en matériau naturel reliées les unes aux autres par adhérence et/ou par frottement,
- une couche supérieure (2) disposée sur la couche inférieure (1) et reliée à celle-ci par liaison de matière, comprenant un second composant (21) présentant des granulés en matériau naturel
- une couche conférant de l'adhérence (3) disposée entre la couche supérieure et la couche inférieure (2, 1).

2. Système de couches (10) selon la revendication 1, **caractérisé en ce que** la couche conférant de l'adhérence (3) comprend des constituants propres à la consommation, en particulier des constituants amylacés, en particulier de la farine et/ou du sucre et/ou des graisses et/ou présente une épaisseur inférieure ou égale à 2 mm.

3. Système de couches (10) selon l'une quelconque des revendications précédentes, **caractérisé en ce qu'**une surface extérieure des granulés du second composant (21) est agrandie par un procédé de rugosification, en particulier par un procédé de rugosification chimique et/ou physique.

4. Système de couches (10) selon l'une quelconque des revendications précédentes, **caractérisé en ce que** le second composant comprend du bois, de la sciure de bois, de la poussière de bois, du liège, des constituants végétaux séchés, en particulier de la paille et/ou du foin ou est constitué de ceux-ci.

5. Système de couches (10) selon l'une quelconque des revendications précédentes, **caractérisé en ce que** la couche supérieure présente une épaisseur comprise dans la plage de 4 à 20 mm, en particulier dans la plage de 7 à 14 mm.

6. Système de couches (10) selon l'une quelconque des revendications précédentes, **caractérisé en ce que** le premier composant comprend du chanvre, du sisal, des fibres de coco, des fibres de bois, du lin, du coton et/ou des fibres de lin oléagineux ou est constitué de ceux-ci.

7. Système de couches (10) selon l'une quelconque des revendications précédentes, **caractérisé en ce que** la couche inférieure (1) présente en outre des constituants granuleux, en particulier des grains.

8. Système de couches (10) selon l'une quelconque des revendications précédentes, destiné à être utilisé dans un enclos pour petits animaux.

9. Procédé de fabrication d'un système de couches (10) selon l'une quelconque des revendications précédentes, dans lequel un produit adhésif est appliqué par pulvérisation, immersion, application au rouleau, application à la brosse ou application à la racle sur un premier composant comportant des matériaux fibreux et/ou sur des granulés d'un second composant (21) et le premier composant (11) est mis en contact avec le second composant (21) de telle manière que le produit adhésif est disposé entre les deux composants, le produit adhésif comprenant des constituants amylacés et/ou un sucre.
